# EUROPEAN PATENT APPLICATION

(11) **EP 1 814 299 A2**
(43) Date of publication of application: **01.08.2007**
(21) Application number: 06018995.8
(22) Date of filing: 11.09.2006
(51) Int. Cl.: H04N 1/32

(54) **Document management system, document disposal management system, document management method, and document disposal management method**

(30) Priority: 31.01.2006 JP 2006022698
(71) Applicant: FUJI XEROX CO., LTD., Minato-ku, Tokyo (JP)
(72) Inventor: Uejo, Hiroyoshi, Ebina-shi Kanagawa (JP); Shiraishi, Ryuuichi, Ebina-shi Kanagawa (JP); Hamasuna, Shunsuke, Ebina-shi Kanagawa (JP); Shinozaki, Kengo, Ebina-shi Kanagawa (JP)
(74) Representative: Grünecker, Kinkeldey, Stockmair & Schwanhäusser Anwaltssozietät

(57) **Abstract**

A document management system manages a printed document with document management information. The document management system includes an electronic document generating unit, a time-information acquiring unit, a storage-information acquiring unit and a management-information storing,unit. The electronic document generating unit generates an electronic document. The time-information acquiring unit acquires information relating to time, which verifies that the electronic document generating unit generated the electronic document. The storage-information acquiring unit acquires information relating to a storage period of the printed document corresponding to the electronic document. The management-information storing unit stores document management information in which identification information of the electronic document is associated with the information relating to the storage period of the printed document.

## Description

### BACKGROUND

### 1. Technical Field

The invention relates to a document management system, a document disposal management system, a document management method, and a document disposal management method, which are suitable for use in document management.

### 2. Related Art

In general, many secret documents that should be kept secret from parties outside a certain department or parties outside the company are handled in offices of companies and public organizations such as city halls. To prevent leakage to third parties, the originals of such secret documents are kept in storage under strict management. On the other hand, secret documents that are no longer necessary are disposed of with a shredder.

In many cases, compulsory storage periods are specified for secret documents relating to accounting (bills, receipts, statements of accounts, etc.). Therefore, before disposing of a secret document by shredding, a person in charge needs to conf irm, using a register of originals, that disposal of the secret document he or she is going to dispose of is really appropriate.

However, in the case of disposing of a large number of secret documents, the work of disposing of the secret documents while checking their respective storage periods one by one is very troublesome and takes long time. Furthermore, there is a risk that a secret document whose storage period has not expired yet may be discarded erroneously due to a human check error.

Thus, JP 2002-368966Adiscloses a scanner with a shredder function, which is equipped with an image reading unit for reading a document, an image storing means for storing the read image data, image data saving means for saving the stored image data, and a shredding means for shredding the document after its image data have been saved. This apparatus makes it possible to keep images of a secret document in storage in the form of electronic data even if the secret document is discarded erroneously though its storage period has not expired yet.

JP 2005-190365 A discloses an output document management system which manages a history of a printed document by registering, in a database, a document ID corresponding to the printed document, sheet IDs for identification of printed sheets, and the number of printed sheets. In the invention of this patent document, in particular, the management of a document is started when it is printed on sheets with a printer. This makes it possible to trace a history of a paper document all the way from its output to disposal using sheet IDs that are unique to printed sheets. Furthermore, a reading permission period can be set for a printed document. With this feature, this patent document discloses a technique of extracting documents that have not been disposed of yet, comparing elapsed times from the dates of output of those documents with their reading permission periods, and sending, to each of users who owns secret documents, if any, whose elapsed times are longer than their reading permission periods, a notice for prompting the user to dispose of those secret documents.

On the other hand, according to the Japanese e-document law (the formal title is "The Law Relating to the use of Information and Communications Technologies in Storage etc. of Documents by Private Companies") which took effect on April 1, 2005, account books and slips, which have been kept in storage in the form of paper documents, can be stored in the form of electromagnetic documents. However, it is obligatory to store original paper documents during storage periods that depend on types of bills. For example, a companywide system such as an account book/slip generation system is commonly employed to handle such slips as ones that are accompanied by a receipt and request the accounting section to pay for an advance.

With such a system, an employee may make an advance that can be reimbursed by the company and later request the company to pay for the advance by inputting necessary items and verifying an amount of money paid using a receipt. That is, in many cases, a slip is generated and printed by inputting necessary items to the system and an employee applies for payment by attaching, to the slip, an evidential material such as a receipt or a bill bearing an amount of money paid, an item paid for, and a date of payment.

In the case where a document is stored electromagnetically according to the Japanese e-document law in such a manner that an application is made by attaching a necessary material such as a receipt, the receipt-attached document is an original and a date of generation or submission of the original should be the start of a storage period. Therefore, a document management system becomes necessary for managing electronic files of documents, which were stored and managed in the form of printed documents.

However, the above references have the following problems.

Since only one original exists for each secret document, the original of a secret document cannot be reproduced even if images of the secret document are stored in the form of electronic data. Therefore, troublesome check work cannot be omitted in disposing of secret documents. Furthermore, erroneous discard due to a human check error cannot be avoided. Where a formal application document is generated by later attaching such a material as a receipt or a bill, document management using a date and time of printing of a printed document may be insufficient.

Most of printed documents are generated by first generating an electronic file using a computer terminal and then printing it on a sheet of paper with a printing device such as a printer. To manage a life cycle of a document that starts from its generation, it has been desired to start management from generation of an electronic file of the document.

### SUMMARY

According an aspect of the invention, a document management system manages a printed document with document management information. The document management system includes an electronic document generating unit, a time-information acquiring unit, a storage-information acquiring unit and a management-information storing unit. The electronic document generating unit generates an electronic document. The time-information acquiring unit acquires information relating to time, which verifies that the electronic document generating unit generated the electronic document. Thestorage-information acquiring unit acquires information relating to a storage period of the printed document corresponding to the electronic document. The management-information storing unit stores document management information in which identification information of the electronic document is associated with the information relating to the storage period of the printed document.

According to this configuration, the document management system can confirm presence of the printed document corresponding to the electronic document and the time at which the' electronic document was generated based on the information relating to the time. Also, the document management system can manage the storage of the printed document corresponding to the electronic document in association with the electronic document. Thus, this facilitates the management relating to the storage of the printed document and enables reliable management of its storage period.

Also, the information, which relates to the storage period of the printed document and is acquired by the storage-information acquiring unit, may include: the information, which relates to the time verifying that the electronic document generating unit generated the electronic document and is acquired by the time-information acquiring unit; and the storage period of the printed document, which is determined in advance in accordance with information relating to a type of the electronic document.

According to this configuration, the document management system acquires and stores the information, which relates to the time verifying that the electronic document generating unit generated the electronic document, and the storage period of the printed document. Therefore, the document management system can surely grasp and manage the storage period of the printed document corresponding to the electronic document or the storage period of the printed document, which is the original corresponding to the electronic document, since the electronic document is generated.

Also, the information, which relates to the storage period of the printed document and is acquired by the storage-information acquiring unit, may include a storage limit of the printed document, which is determined from (i) the information, which relates to the time verifying that the electronic document generating unit generated the electronic document and is acquired by the time-information acquiring unit and (ii) the storage period of the printed document, which is determined in advance in accordance with information relating to a type of the electronic document.

According to this configuration, the storage period is determined in accordance with the type of the document, and the storage limit is acquired. Therefore, the document management system can surely grasp and manage the storage period of the printed document corresponding to the electronic document or the storage period of the printed document, which is the original corresponding to the electronic document, since the electronic document is generated.

Also, the information, which relates to the storage period of the printed document and is acquired by the storage-information acquiring unit, may include (i) the information, which relates to the time verifying that the electronic document generating unit generated the electronic document and is acquired by the time-information acquiring unit, and (ii) information relating to a type of the electronic document.

According to this configuration, the management-information storing unit stores the information relating to the time verifying that the electronic document was generated and the type of the document. Therefore, the document management system can surely grasp and manage the storage period of the printed document corresponding to the electronic document or the storage period of the printed document, which is the original corresponding to the electronic document, based on the storage period according to the type of the document.

Also, the electronic document generating unit may read the printed document to generate the electronic document.

Also, the electronic document generating unit may read the printed document optically to generate the electronic document.

According to the above configurations, even if an original printed document is already prepared, the document management system can read the printed document to generate the electronic document, and store the computerized printed document. Furthermore, the document management system can manage the printed document and the electronic document in the storage period in which the original is obliged to be stored.

Also, the electronic document generating unit may include a computer terminal. A document creation program running on the computer terminal may perform process for creating the electronic document to generate the electronic document.

According to this configuration, the electronic document is generated with the computer, and the document management system acquires the information relating to the time verifying that the electronic document was generated in managing the document printed on a basis of the electronic document. Therefore, the document management system can store the printed document corresponding to such electronic document time-related information in the form of computerized file. Furthermore, Furthermore, the document management system can manage the printed document and the electronic document in the storage period in which the original is obliged to be stored.

Also, identification information of the electronic document may be acquired in response to that the electronic document generating unit generates the electronic document.

According to this configuration, the identification information is acquired when the electronic document is generated. Therefore, the document management system can store and manage documents using identification numbers relating to processing performed in a voucher generation system, for example. As a result, the document management system can mange documents more easily.

Also, the document management system may further include an extracting unit and a decoding unit. The extracting unit extracts identification code from data, which is read from the printed document by the electronic document generating unit. The decoding unit decodes the identification code into identification information of the electronic document.

Also, the document management system may further include an extracting unit and a decoding unit. The extracting unit extracts identification code from data, which is optically read from the printed document by the electronic document generating unit. The decoding unit decodes the identification code into identification information of the electronic document.

According to the above configurations, since the identification information is coded, the document management system can obtain the identification information by decoding the code. Thereby, it becomes easy and reliable to associate the printed document with the electronic document.

Also, the document management system may further include an image feature quantity calculating unit. The image feature quantity calculating unit calculates a digest value unique to the electronic document. The time-information acquiring unit sends a time stamp request including the calculated digest value of the electronic document to a time stamp station to acquire a time stamp from the time stamp station as the information relating to the time verifying that the electronic document generating unit generated the electronic document time-related information.

According to this configuration, the image feature quantity calculating unit can calculate the digest value unique to the electronic document. Also, the time-information acquiring unit can acquire the time stamp using the digest value. Thereby, the document management system can associate the time information obtained surely with the electronic document. As a result, the document management system can surely manage the time at which the electronic document was generated, and manage and store documents accurately and reliably.

According to another aspect of the invention, a document disposal management system includes a management-information storing unit, a disposal-document identification-information reading unit, a disposal-information extracting unit, a disposal permission judging unit and a disposal unit. The management-information storing unit stores document management information in which pieces of identification information of electronic documents are associated with pieces of information, which relate to storage of printed documents corresponding to the electronic documents and have been set based on of time at which the electronic documents were generated. The disposal-document identification-information reading unit reads identification information of a disposal target document from the disposal target document. The disposal-information extracting unit extracts information, which relates to storage of the disposal target document and corresponds to the identification information of the disposal target document, from the pieces of document management information stored in the management-information storing unit. The disposal permission judging unit judges whether or not it is permitted to dispose of the disposal target document based on the information, which relates to the storage of the disposal target document and is extracted by the disposal-information extracting unit: The disposal unit disposes of the disposal target document if the disposal permission judging unit judges that it is permitted to dispose of the disposal target document.

Also, the information relating to the storage of the disposal target document may include at least one of a storage period of the disposal target document, a storage limit of the disposal target document, and a disposal permission date of the disposal target document.

According to these configurations, the document disposal management system stores and manages printed documents using the information relating to the time verifying that the electronic document was generated. Thereby, the document disposal management system can store the printed document corresponding to the electronic document in the form of computerized file. Furthermore, the document disposal management system can make a judgment regarding disposal reliably. As a result, erroneous disposal-related operations such as erroneous discard of a document, which should be stored, and a failure in disposing of a document that should be disposed of.

According to a still another aspect of the invention, a document management method includes: generating an electronic document; acquiring information relating to time, which verifies that the electronic document was generated; acquiring information relating to a storage period of a printed document corresponding to the electronic document; storing document management information in which identification information of the electronic document is associated with the information relating to the storage period of the printed document; and managing the electronic document or the printed document, which is a printed electronic document, using the document management information.

According to a further aspect of the invention, a document disposal management method includes: storing document management information in which pieces of identification information of electronic documents are associated with pieces of information, which relate to storage of printed documents corresponding to the electronic documents and have been set based on of time at which the electronic documents were generated; reading identification information of a disposal target document from the disposal target document; extracting information, which relates to storage of the disposal target document and corresponds to the identification information of the disposal target document, from the pieces of stored document management information; judging whether or not it is permitted to dispose of the disposal target document based on the extracted information, which relates to the storage of the disposal target document; and disposing of the disposal target document if it is judged that it is permitted to dispose of the disposal target document.

### BRIEF DESCRIPTION OF THE DRAWINGS

Exemplary embodiments of the invention will be described in detail based on the following figures, wherein:
Fig. 1 shows the configuration of a document management system according to an exemplary embodiment of the invention;
Fig. 2 is a block diagram showing an exemplary configuration of an electronic document generation apparatus;
Fig. 3 is a block diagram showing an exemplary configuration of a document management apparatus;
Fig. 4 schematically shows an exemplary mechanism of a manual-feed-type document disposal apparatus;
Fig. 5 is a top view of a document tray unit;
Fig. 6 is a block diagram showing an exemplary configuration of the document disposal apparatus;
Fig. 7 is a flowchart of an exemplary management information generation process for generating an electronic document by scanning;
Fig. 8 illustrates an exemplary manner of generation of a document according to the exemplary embodiment of the invention;
Fig. 9 shows an exemplary table showing a corresponding relationship between document types and storage periods;
Fig. 10 is a flowchart of an exemplary process for registering document management information in the document management apparatus;
Fig. 11 shows an exemplary document management table;
Fig. 12 is the first part of a flowchart of an exemplary document disposal process; and
Fig. 13 is the second part of the flowchart of the exemplary document disposal process.

### DETAILED DESCRIPTION

Exemplary embodiments of the invention will be hereinafter described in detail with reference to the drawings.

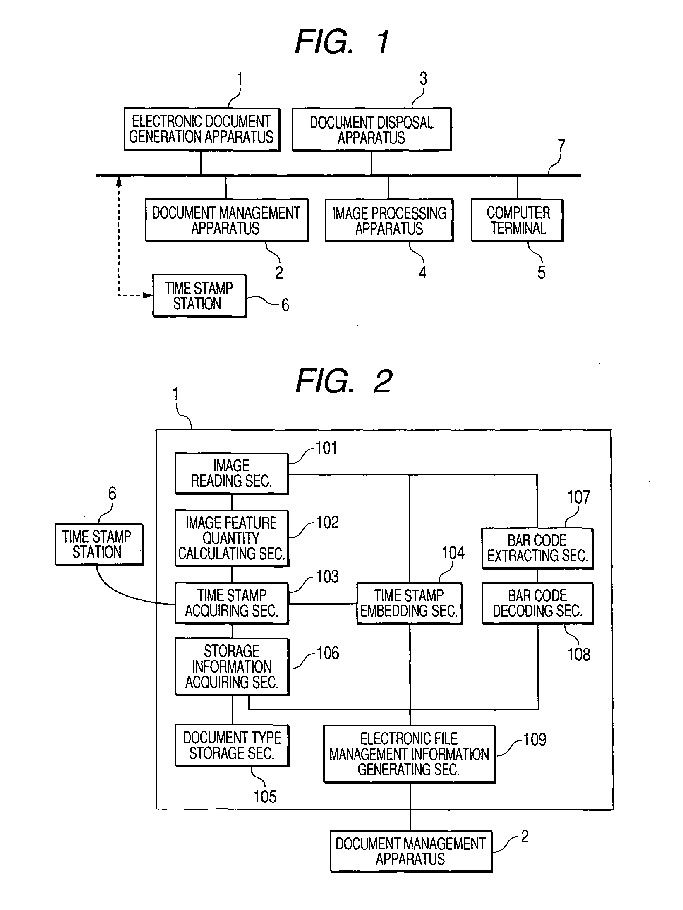

Fig. 1 shows the configuration of a document management system according to an exemplary embodiment of the invention. The illustrated document management system includes an electronic document generation apparatus 1, a document management apparatus 2, a document disposal apparatus 3, an image processing apparatus 4, and a computer terminal 5. Connected to a common network 7, the electronic document generation apparatus 1, the document management apparatus 2, the document disposal apparatus 3, the image processing apparatus 4, and the computer terminal 5 can access another external network via the common network 7 and can also access a time stamp station 6 via the common network 7 and the external network.

The electronic document generation apparatus 1 generates an electronic file, which is electronic information. The document management apparatus 2 performs various kinds of management processing on the documents generated by the electronic document generation apparatus 1. The document disposal apparatus 3 performs disposal processing on the documents generated by the electronic document generation apparatus 1 and other documents. The network 7 is configured by using a LAN (local area network) or a WAN (wide area network), for example.

Fig. 2 is a block diagram showing an exemplary configuration of the electronic document generation apparatus 1. For example, the electronic document generation apparatus 1 may be configured by using an image forming apparatus such as a digital copier or a digital multi-function machine (copier) or a terminal apparatus such as a computer. In this exemplary embodiment, description will be given on the case where the electronic document generation apparatus 1 is configured by using a digital multi-function machine.

The electronic document generation apparatus 1 includes an image reading section 101 for reading a document optically, an image feature quantity calculating section 102 for calculating an image feature quantity of electronic image data generated by reading the document, a time-stamp acquiring section 103 for sending the image feature quantity to the time stamp station 6 to acquire a time stamp, a time stamp embedding section 104 for embedding the acquired time stamp in the electronic image data, a document-type storing section 105 for storing document storage information in association with storage period according to a type of document read by the image reading section 101, a storage information acquiring section 106 for determining storage information on the basis of date and time, which verify that an electronic file was generated and is obtained from the acquired time stamp information, a bar code extracting section 107 for extracting a bar code from the image data generated by the reading by the image reading section 101, a bar code decoding section 108 for decoding the extracted bar code, and an electronic file managementinformation generating section 109 for generating electronic file management information on the basis of the storage information, the image data in which the time stamp is embedded, and a document ID obtained by decoding the bar code.

The electronic document generation apparatus 1 is also equipped with an operation panel (not shown in Fig. 2). The operation panel serves as a user interface through which a user of the electronic document generation apparatus 1 inputs various kinds of information and on which various kinds of information are displayed for the user. For example, the operation panel is composed of an input unit having various buttons, switches, keys, etc. and a display unit which is a liquid crystal panel with a touch panel.

The image reading section 101 optically reads images of a document as a subject of reading. The image reading section 101 generates image data (scanning data) corresponding to a document sheet image by applying light to the surface of a document sheet set on a transparent document table (platen glass) and forming an image of reflection light returning from the document sheet surface on the photodetecting surface of a reading sensor (CCD sensor or the like) via an image forming optical system including mirrors and lenses. During that course, the document sheet surface is scanned for reading as the image forming optical system is moved. The image feature quantity calculating section 102 calculates a feature quantity representing a feature of the read-out image data, from the read-out image data.

The bar code extracting section 107 reads a bar code that is attached to a prescribed corner portion of the document from its read-out image data. The bar code is information including at least a document ID that is set as identification information unique to the document. In general, bar codes are generally classified into one-dimensional bar codes in which pieces of information are arranged only in one direction and two-dimensional bar codes in which pieces of information are arranged in two orthogonal directions. Bar codes of both types may be used in practicing this exemplary embodiment. However, where it is desired to have a bar code contain not only a document ID but also other various kinds of information and data, a two-dimensional bar code having a larger data capacity may be used. This exemplary embodiment employs, as an example, a QR code (registered trademark) which is a kind of two-dimensional bar code and is now widespread. The bar code decoding section 108 extracts the document ID by decoding the read-out QR code (coded information).

On the other hand, the image feature quantity calculating section 102 calculates a feature quantity of the read-out image on the basis of the image data generated by the image reading section 101. For example, the feature quantity may be a unique value obtained by calculating a predetermined calculation formula using the read-out image data such as a hash value of the read-out image data may be used.

The time-stamp acquiring section 103 sends, to the time stamp station 6, the hash value that has been calculated by the image feature quantity calculating section 102 and is unique to the read-out image data. The time-stamp acquiring section 103 can thus obtain, from the time stamp station 6, date and time at which the read-out image file was generated, as a reliable time.

Alternatively, where a date and time need not be as accurate as one issued by the public time stamp station 6, the document management system may be configured in such a manner that the time-stamp acquiring section 103 acquires time information from a time management server, which can be accessed by plural electronic document generation apparatus 1, image processing apparatus 4, and document disposal apparatus 3 (described later) in the system. Even in this case, a certain level of time management can be attained in the system.

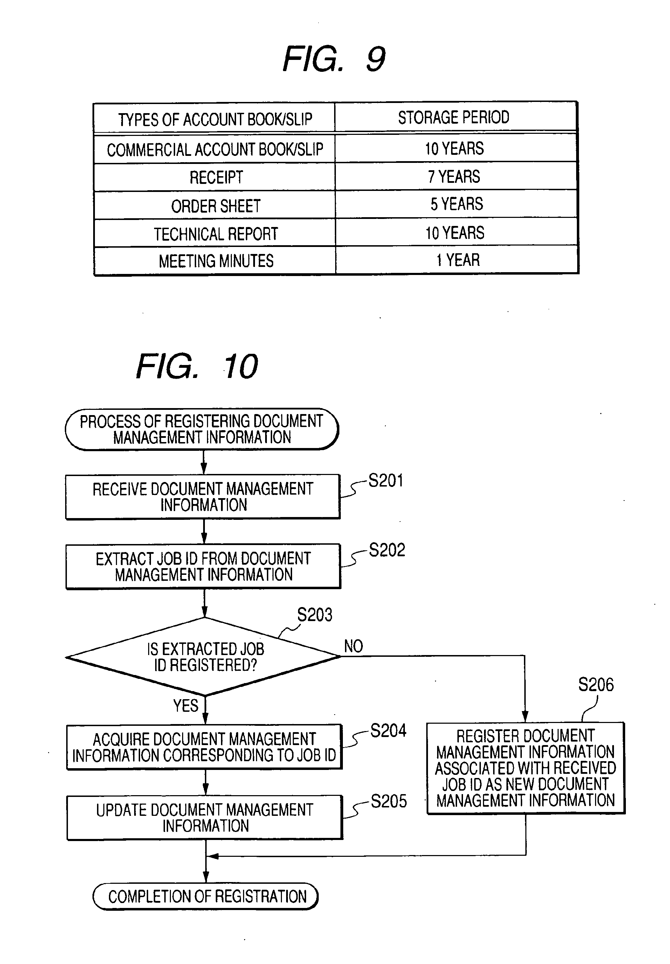

The document-type storing section 105 stores a table showing a corresponding relationship between document types and storage periods. Fig. 9 shows an example of such a table. That is, storage periods for which originals should be stored, such as obligatory storage periods prescribed by a law for respective document types and storage periods prescribed by company rules, are registered in advance in the form of a table, in association with document types.

The storage information acquiring section 106 acquires a storage limit by calculating a last storage date until which the original should be managed without being disposed of, on the basis of the acquired time information (e.g., time stamp) and a storage period, which is stored in the document-type storing section 105 and corresponds to the type of the document concerned. If the storage information acquiring section 106 stores the acquired time information (time stamp) and the storage period in the form of a set, it need not manage the storage limit. Alternatively, if the storage information acquiring section 106 acquires time information (acquired time stamp) and a document type, it can manage information relating to a storage period using the corresponding relationship between the document type and the storage period.

The electronic file management information generating section 109 associates the document ID, file generation information and storage period information with each other and sends those to the document management apparatus 2 as document management information. The file generation information at least includes the file generation date and time and preferably includes file generator information, information for identification of an apparatus that generated the file, image information of the generated document, etc. Information relating to management or storage of a generated or printed document such as information relating to a person or section in charge of management of a processed application document or information relating to a location where the original of an application document is kept in storage may be registered together with the document ID, the file generation information, and the storage period information. This makes it possible to manage the information relating to the document concerned such as an application document in a unified manner.

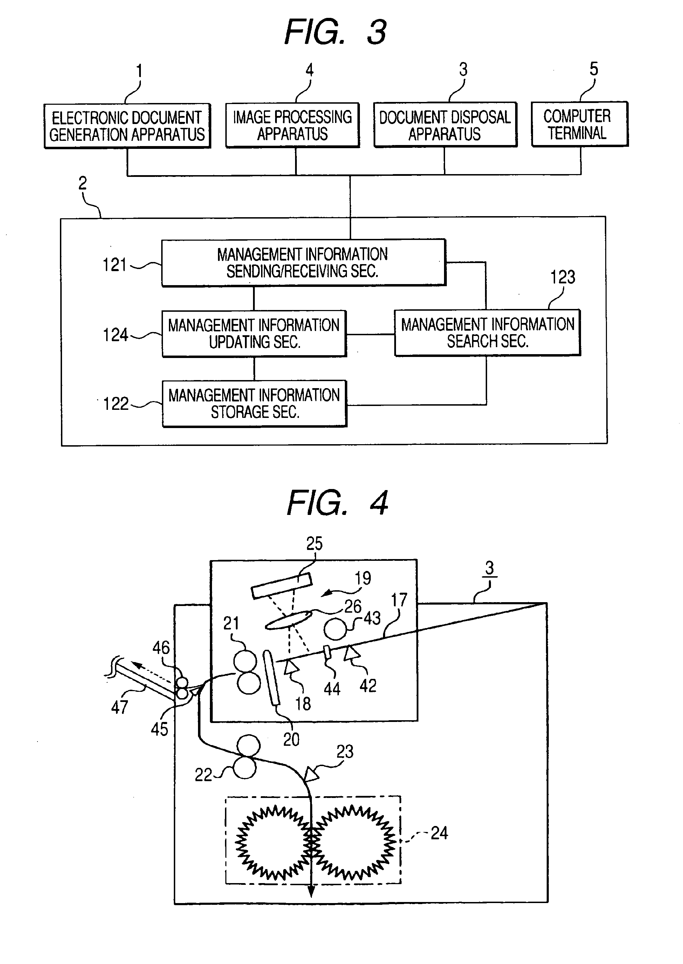

Fig. 3 is a block diagram showing an exemplary configuration of the document management apparatus 2. The document management apparatus 2 is configured by using such an apparatus as a personal computer or a server. The document management apparatus 2 is connected, via the network 7, to other apparatus, that is, the electronic document generation apparatus 1, the document disposal apparatus 3, the image processing apparatus 4 which performs such processing as reading or copying a document by scanning it and facsimile transmission and reception, other document management apparatus 2, and the computer terminal 5 which is used for generating a document such as an account book or a slip. The document management apparatus 2 generates, modifies, adds information to, deletes information from, searches, and performs other processing on document management information according to an instruction the above apparatus.

A management information sending/receiving section 121 has functions of receiving an instruction from the other apparatuses, and sending document management information, details of a particular item of the document management information or permission information for disposal processing according to the received instruction.

A management information storage section 122, which is a large-capacity storage medium such as a hard disk drive, stores pieces of information relating to documents in the form of a database in such a manner that they are associated with document IDs. The document management apparatus 2 manages pieces of the document management information stored in the management information storage section 122 together with document statuses and information relating to disposal processing so as to be associated with document IDs that were set when documents were generated in the form of electronic files.

A management information search section 123 has a function of retrieving, when receiving an instruction to extract management information of a document having a particular document ID from one of the above-mentioned other apparatus, management information of the instructed document from the stored pieces of document management information by doing a search with the instructed document ID as a key.

When particular processing such as disposal of a document has been performed in response to an instruction from the external apparatuses, the management information sending/receiving section 121 receives an instruction from the external apparatuses and the management information search section 123 searches the management information storage section 122 for management information corresponding to a particular document ID according to the received instruction or information relating to the processing performed. The management information search section 123 extracts the document management information corresponding to the particular document ID that has been found by the search. The management information sending/receiving section 121 sends the extracted document management information to the external apparatus according to the instruction or information received from the external apparatus. A management information updating section 124 updates the document management information on the basis of the details of the processing performed by the external apparatus.

If the management information has been updated successfully, the management information sending/receiving section 121 may send, if necessary, information to the effect that updating of the document management information has completed to the external apparatus. If the updating of the document management information has failed, a procedure may be followed that the management information search section 123 retrieves a document manager or generator from the document management information corresponding to the document ID and the management information sending/receiving section 121 informs the document manager or generator that an instruction to process the document was received.

Fig. 4 schematically shows an exemplary mechanism of a manual-feed-type document disposal apparatus 3. The document disposal apparatus 3, which is configured by using a shredder, for example, is equipped with a document tray unit 17, an insertion sensor 18, a reading optical system 19 of a bar code reader, a stopper 20, pairs of feed rolls 21 and 22, a passage sensor 23, and a shredder unit 24.

The document tray unit 17 is a unit on which a document as a subject of disposal is placed. The document tray unit 17 is inclined from the horizontal plane so as to descend gradually toward the stopper 20. The back side (lower side) of the document tray unit 17, together with the insertion sensor 18, the reading optical system 19, the stopper 20, and the feed rolls 21, is covered with a cover member (not shown).

The insertion sensor 18 detects a document that has been inserted to a prescribed reading position on the document tray unit 17. For example, the insertion sensor 18 is a reflection-type optical sensor having a light-emitting element and a photodetector. The insertion sensor 18 is rendered in an on state when a document exists at its sensing position and in an off state when no document exists at the sensing position.

The reading optical system 19 of the bar code reader is configured in such a manner that light emitted from a light source (not shown) is applied to a bar code recording portion of a document as a subject of disposal and an area sensor 25 captures a bar code image by detecting reflection light via a lens 26. The bar code recording portion is a portion of a document surface where a bar code is recorded which includes a document ID and other information. The bar code recording portion is located at a corner position of a document and its dimensions are predetermined.

The stopper 20 has a long plate-like structure, for example, and is disposed between the insertion sensor 18 and the feed rolls 21. The stopper 20 opens or closes a document transport passage formed by the pairs of feed rolls 21 and 22 at its entrance. In a closed state, the stopper 20 is projected so as to interrupt a document path from the document tray unit 17 to the feed rolls 21. Therefore, in this state, if a user tries to insert a document inward on the document tray unit 17, the head of the document butts against the stopper 20. In contrast, in an open state, the stopper 20 is retracted from the document path from the document tray unit 17 to the feed rolls 21. Therefore, if a user tries to insert a document inward on the document tray unit 17, the head of the document butts into the nip portion of the feed rolls 21.

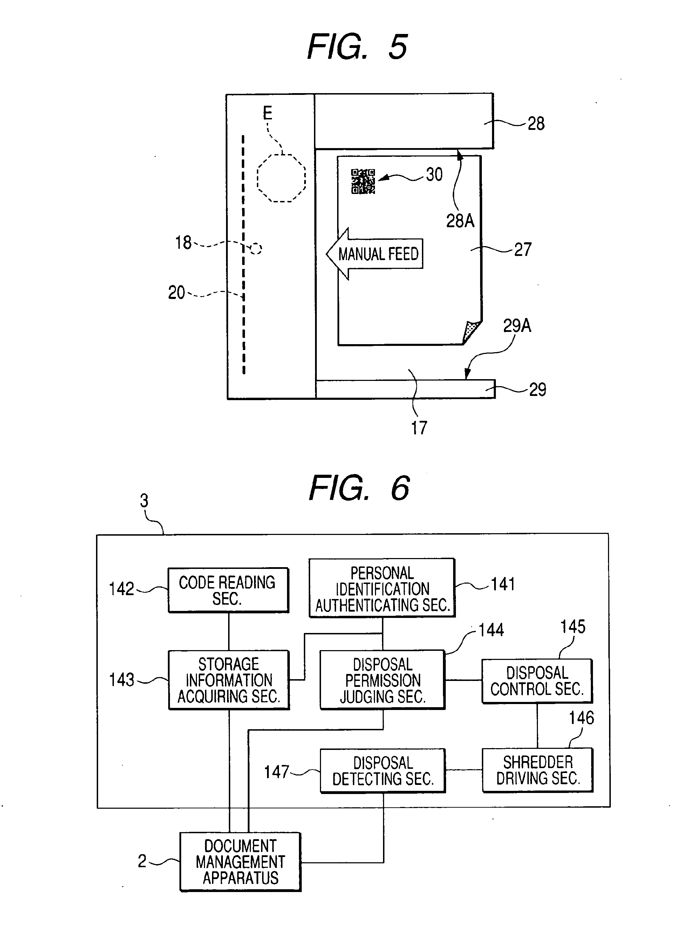

Fig. 5 is a top view of the document tray unit 17. The document tray unit 17 is equipped with insertion guides 28 and 29 on both sides of a passage along which a document 27 is inserted manually (the insertion direction is indicated by an arrow). The insertion guides 28 and 29 have respective guide surfaces 28A and 29A which are parallel with the document insertion direction. Whereas the insertion guide 28 is fixed, the insertion guide 29 can be moved in the document width direction (vertical direction in Fig. 5) if necessary. The document 27 as a subject of disposal is inserted on the document tray unit 17 in the arrow direction with an orientation that a bar code recording portion 30 is located at a head-side corner position. At this time, to position the document 27 in the direction perpendicular to the insertion direction, one sideline of the document 27 is fully brought into contact with the guide surface 28A of the insertion guide 28.

As a result, in a state that the head of the document 27 is in contact with the stopper 20 as a result of manual insertion by a user, the bar code recording portion 30 is positioned inside a code reading area E of the bar code reader. The insertion sensor 18 is disposed immediately upstream of the stopper 20 in the document insertion direction. Therefore, the insertion sensor 18 is switched from an off state to an on state immediately before the head of the document 27 butts against the stopper 20 as it is inserted manually by a user. Therefore, on-timing of the insertion sensor 18 indicates a time point when the bar code recording portion 30 of the document 27 is put in the code reading area E.

The feed rolls 21 rotate while nipping a document that has been introduced by opening the stopper 20, and thereby transport the document along a document transport passage, which is formed by a transport guide member (chute or the like; not shown). The feed rolls 22 rotate while nipping a document that has been transported by the feed rolls 21, and thereby transport the document to the shredder unit 24 along the document transport passage.

The passage sensor 23 is disposed at a halfway position (approximately at the center) of the document transport passage from the feed rolls 22 to the shredder unit 24 and detects a passage of a document. For example, the passage sensor 23 is a reflection-type optical sensor having a light-emitting element and a photodetector. The passage sensor 23 is rendered in an on state if a document exists at the sensing position and in an off state if no document exists at the sensing position. Therefore, the passage sensor 23 is switched from an off state to an on state at the same time as the head of a document passes its sensing position. When the tail of the document thereafter passes the sensing position, the passage sensor 23 is switched from the on state to an off state.

The shredder unit 24 shreds a document fed by the feed rolls 22 while pulling the document into itself in one direction (indicated by an arrow). The shredder unit 24 can shred plural document sheets (e.g. , a bundle of about 20 A4-size plain sheets) together. Furthermore, the shredder unit 24 can shred even stapled document sheets as they are (i.e., in a state that staples are not removed).

Fig. 6 is a block diagram showing an exemplary configuration of the document disposal apparatus 3. A personal identification authenticating section 141 has a function of identifying a user who is trying to perform disposal, using an IC card, a magnetic card, or the like. Various known authentication techniques other than the above technique of identifying a user using such a card can be used. Examples of those authentication techniques are a biometric authentication technique which utilizes a body feature such as a finger print or an iris and a technique that a server that manages user information identifies a user on the basis of a user ID and a password that are input through an operation panel.

A code reading section 142 reads, with the reading optical system 19, a code, printed on a document, of identification information for identification of an electronic file and decodes the code attached to the document based on the reading result to acquire original information represented by the code. A storage information acquiring section 143 extracts the identification information (i.e., a document ID) for identification of the electronic file from the original information acquired by the code reading section 142 and sends the document ID to the document management apparatus 2 together with log-in user information of the user identified by the personal identification authenticating section 141. A disposal permission judging section 144 has functions of receiving, from the document management apparatus 2, storage period information and disposal management information, which correspond to the document ID that was sent by the storage information acquiring section 143, and judging whether disposal of the document is permitted or prohibited on the basis of the storage period information for the document, the disposal management information for the document and the information for identification of the disposer that was acquired by the personal identification authenticating section 141.

The disposal management information is used in judging whether disposal of the corresponding document is permitted or prohibited. For example, the disposal management information may include information of a person who approves the disposal of the document, information of a person who creates the document, information of amount of a receipt and/or information of amount of a bill.

A disposal control section 145 sends a signal for starting disposal to a shredder driving section 146 if the judgment result of the disposal permission judging section 144 indicates that disposal is permitted, to execute disposal. If the judgment result of the disposal permission judging section 144 indicates that the document should not be disposed of because disposal of the document is prohibited or the user is not permitted disposal, the disposal control section 145 does not send a signal for starting disposal to the shredder driving section 146 and performs a control so that a message to the effect that disposal is prohibited, as well as a reason, is displayed on the operation panel. If necessary, the disposal control section 145 may send, to the document management apparatus 2, the fact that a disposal attempt was made without permission so that it is registered as management information and communicated to a document manager, document generator, or the like.

The shredder driving section 146 causes the shredder unit 24 to dispose of the document in response to the drive start signal that is sent from the disposal control section 145. A disposal detecting section 147 monitors whether the shredder unit 24 has performed the disposal processing successfully and, if detecting that the disposal has been completed, notifies the document management apparatus 2 to that effect. Notifying the document management apparatus 2 of a processing result is done to allow the document management apparatus 2 to manage, as disposal processing information correlated with the document ID, pieces of information when and by whom the disposal work was done and that the disposal was performed successfully.

The document disposal apparatus 3 of this exemplary embodiment is equipped with the operation panel (not shown in Fig. 6) in addition to the above-described components. The operation panel has functions of prompting a user to perform a manipulation relating to disposal processing and displaying a disposal judgment result, management information relating to a document to be disposed of, information relating to a user who is going to perform disposal, and other information.

Next, a document management method using the above-configured document management system will be described as an exemplary embodiment. The document management method according to the following exemplary embodiment is divided into two kinds of processing, that is, document generation processing and document disposal processing, each of which will be described below in detail.

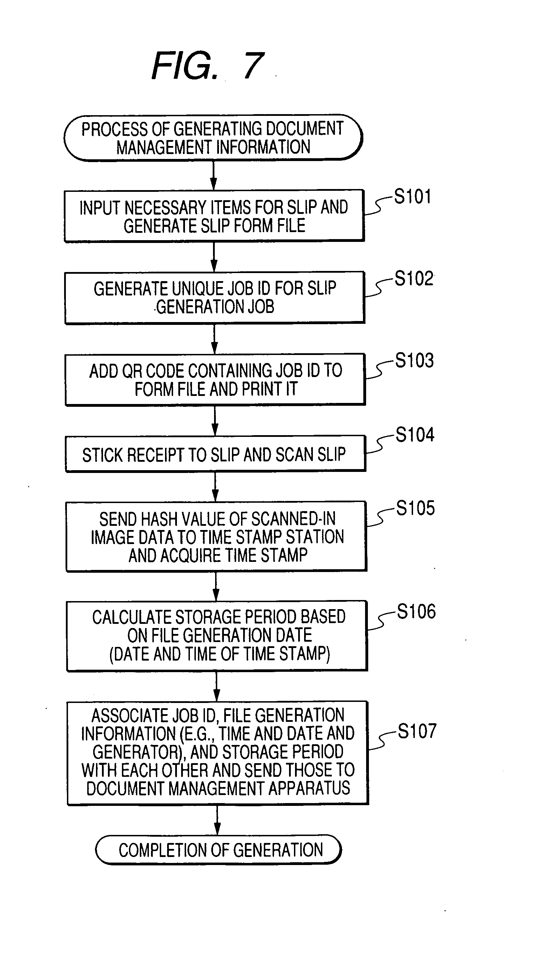

Documents, which this exemplary embodiment deals with, are such that electronic documents are generated by the document generation processing and managed by assigning them unique document IDs individually. Examples of such electronic documents are one generated by digitizing a printed document (printed on a sheet (s)) to be stored and, conversely, one generated according to a certain document generation program to print a document to be stored. The document ID unique to an electronic document may consist of only numerals or may be formed by combining numerals, alphabetical characters, symbols, etc. A specific document management method according to this exemplary embodiment that is directed to a case of handling documents to serve as vouchers for an accounting audit, a tax audit, etc. will be describedbelowwith reference to a flowchart of Fig. 7 (management information generation process).

First, for example, a case of generating a voucher using a voucher generation system for generating a voucher according to a prescribed format by inputting items necessary for generation of the voucher will be described.

In the voucher generation system, at step S101, an application form file is generated by inputting items necessary for generation of a voucher. Exemplary items necessary for generation of a voucher are items relating to a voucher generation job such as a voucher generation processing date, a date of a bill, and a user ID or a name of a user himself or herself. When necessary items are input, an application form in which the input items are arranged at prescribed positions is generated as an electronic document according to a format that is suitable for a voucher the user is going to generate. When printing an application form, at step S102 the voucher generation system generates a document ID as an ID for identification of a document to be generated by the job. Where the voucher generation system itself has a numbers-managing function of assigning a unique number (document ID) to a job, the voucher generation system generates a unique document ID for each document generated by a job.

In the case of a system which, unlike the above voucher generation system which manages IDs unique to documents generated by jobs, generates a document using such software as a general document generating application, the document management apparatus 2 may be given a function of managing IDs for identification of documents. In this case, a procedure may be followed that the document management apparatus 2 issues a document ID other than ones already registered therein after information exchange with the electronic document generation apparatus 1 and the electronic document generation apparatus 1 acquires the issued document ID and employs it as a document ID for an application being processed or document generation. This document ID is an ID that has been assigned to an application-handling job done and serves to correlate the application-handling job with the application form.

At step S103, the generated application form file is printed after being combined with a coded version of the document ID, as part of or independently of the voucher generation job.

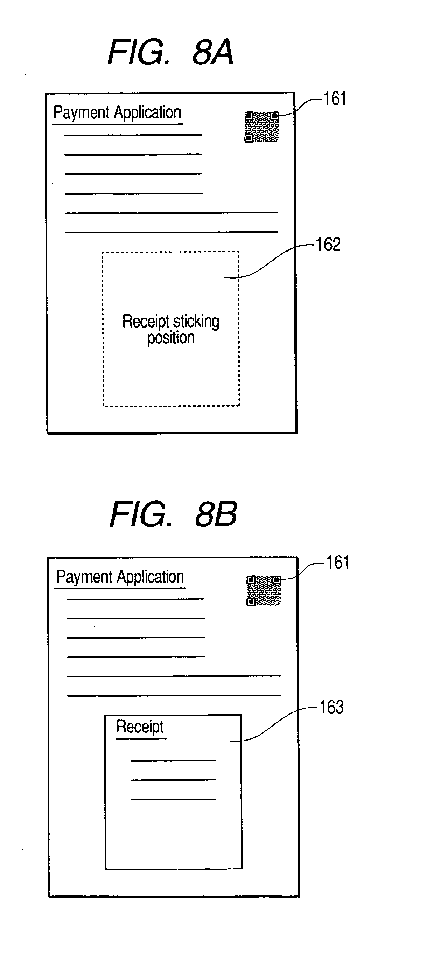

An exemplary application form as printed at step S103 will be described below with reference to Fig. 8. The voucher generation system generates or acquires a document ID, and prints an application form with a QR code in which a QR code 161 containing the document ID and other information is incorporated at a prescribed position (e.g., at a corner position) as shown in Fig. 8A. The QR code contains at least information relating to the document ID and may also contain, for example, a document type of the generated application document, an amount of money of a receipt or a bill, and a storage period corresponding to the document type or the amount of money.

To embed information relating to a storage period corresponding to a document type or an amount of money in a QR code, a table as exemplified in Fig. 9 may be used in which document types and storage periods for which originals should be stored are correlated with each other. A storage period for which an original should be stored may be an obligatory storage period prescribed by a law in accordance with a document type. Alternatively, a length for which an original should be stored may be one obtained by registering storage periods in advance in the form of a table according to company rules and determining a storage period from the table on the basis of a document type selection result or an input result in the voucher generation system. As a further alternative, a storage period for which an original should be stored may be set automatically according to a table by causing a user who is going to generate a document to select a document type or judging whether the document includes a particular character string by character recognition.

The application form has a region 162 to which a receipt is pasted. As shown in Fig. 8B, an applicant can stick a receipt 163 to the region 162 of the application form and, if necessary, for example, add statements and put his or her seal thereto. In this manner, the original of an application document is generated by sticking the receipt 163.

After generating the payment application document to which the receipt 163 is stuck in the above manner, the applicant sets the payment application document on the document table of the electronic document generation apparatus 1 and causes the image reading section 101 to read the payment application document (step S104). An electronic file of the application document to which the receipt 163 is stuck is thus generated. On the other hand, the QR code is printed on the application document at the corner position (it was printed when the application form was printed at step S103) . The bar code extracting section 107 of the electronic document generation apparatus 1 extracts the QR code located at the prescribed corner position from the read-out image data of the application document. The bar code decoding section 108 extracts the document ID by decoding the extracted QR code (coded information).

On the other hand, after the electronic file of the payment application document has been generated by scanning, at step S105 the electronic document generation apparatus 1 acquires date and time at which the electronic file is generated from the time stamp station 6. To this end, the image feature quantity calculating section 102 calculates a feature quantity of the read-out image. For example, the feature quantity may be values unique to the read-out image data obtained by calculating a predetermined formula based on the read-out image data, such as hash value of the read-out image data.

The time-stamp acquiring section 103 sends, to the time stamp station 6, the hash value that has been calculated by the image feature quantity calculating section 102 and is unique to the read-out image data. The time-stamp acquiring section 103 can thus obtain, from the time stamp station 6, the date and time at which the image file is generated, as a reliable date and time.

Alternatively, where a date and time need not be as accurate as one issued by the public time stamp station 6, the document management system may be configured in such a manner that the time-stamp acquiring section 103 acquires time information from a time management server which can be accessed by the plural electronic document generation apparatus 1, image processing apparatus 4, and document disposal apparatus in the system. Even in this case, a certain level of time management can be attained in the system.

At step S106, the storage information acquiring section 106 calculates a period in which the application document should be stored without being disposed of on the basis of the thus-acquired file generation date and time and information relating to a storage period that is predetermined in accordance with the type of the application document.

For example, if a document to be handled in this exemplary embodiment is a national-tax-related document such as a receipt document, the e-document law renders it obligatory to keep the document in storage for seven years. Depending on the amount of money of a receipt, sticking of a revenue stamp is obligatory, in which case the original cannot be disposed of. Furthermore, original storage periods may be set according to company rules so as to depend on document types, such as an original storage period of materials used for directors' reports and an original storage period of technical reports.

As described above, different storage periods of original management are set for respective document types (application document types) . For example, storage periods are set in a table showing a corresponding relationship, an example of which is shown in Fig. 9. A storage period corresponding to the type of a read-out paper document is determined from a table in which storage periods of original paper documents are set for respective document types, and the storage information acquiring section 106 calculates an end of a storage period.

For example, a type of a read-out paper document may be determined by extracting, by character recognition, a character string such as "receipt" or "order sheet" that can be used for determining a document type from read-out image data. Alternatively, a document type may be embedded in a QR code in advance together with a document ID and a storage period, and the storage period is determined from a table as exemplified in Fig. 9 in which document types are associated with storage periods. As a further alternative, if storage period information is embedded in a QR code by determining a storage period from a table in which document types are associated with storage periods before generating the QR code, it is possible to decode the storage period information in addition to a document ID and calculate a storage limit on the basis of the thus-obtained storage period.

In this exemplary embodiment, storage period information is generated on the basis of the storage period that is set depending on the document type and the document generation date that was acquired at step S105. The storage period information may simply be the number of years as a storage period. However, it is preferable that the storage period information be an end date until which storage is required, a date when disposal becomes possible, or a date as a changing point of a condition relating to storage and disposal.

At step S107, the electronic file management information generating section 109 associates the document ID, the file generation information, and the storage period information with each other and sends those to the document management apparatus 2 as document management information. The file generation information at least includes the file generation date and time and preferably includes file generator information, information for identification of the apparatus that generated the file, the image information of the generated document, etc. Information relating to management or storage of a generated or printed document such as information relating to a person or section in charge of management of a processed application document or information relating to a location where the original of an application document is kept in storage may be registered together with the document ID, the file generation information, and the storage period information. This makes it possible to manage the information relating to the document concerned such as an application document in a unified manner.

Next, document management information registration, storage, and update processing performed by the document management apparatus 2 when receiving document management information will be described with reference to a process flowchart of Fig. 10.

In the document management apparatus 2, the management information sending/receiving section 121 receives document management information at step S201 and a document ID is extracted from the management information at step S202. The management information search section 123 searches the management information storage section 122 for document management information corresponding to the extracted document ID. If such document management information is registered (step S203: yes), the management information search section 123 acquires it at step S204. At step S205, the management information updating section 124 updates part of the registered document management information. On the other hand, if no document management information is registered as corresponding to the extracted document ID (step S203: no), at step S206, the management information updating section 124 registers the file generation information, the storage period information, the information relating to storage or management, and other information that were received by the management information sending/receiving section 121 as new document management information.

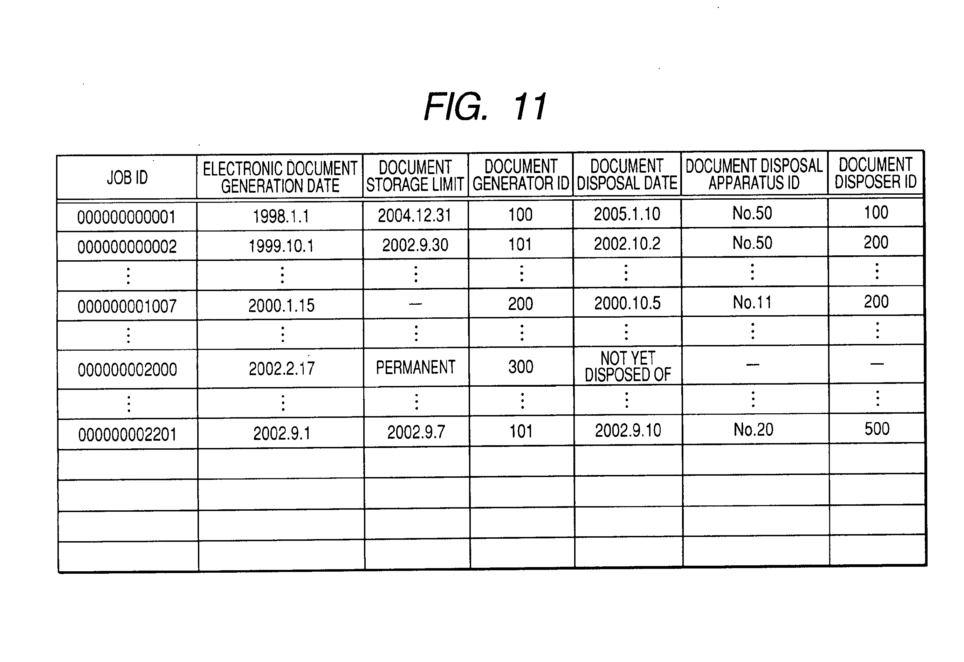

An exemplary document management table, which is managed by the document management apparatus 2, will be described with reference to Fig. 11. As shown in Fig. 11, a "document ID," a "document generation date," a "document storage period," and a "document disposal date" are registered in the document management table so as to be correlated with each other. The "document ID" may be one obtained by decoding a QR code or one that was assigned to the document by the document management apparatus 2 itself or a separate server apparatus when it generated document data with a bar code (mentioned above). The "document generation date" is a date of generation of the document. In this exemplary embodiment, a date on which image data produced by reading the document such as a payment application document with the document generation apparatus 1 are sent to the document management apparatus 2 is registered as a "document generation date."

The "document storage period" is a date indicating a period in which the document should be stored. In this exemplary embodiment, the last date of a period in which the document should be stored and that is determined from the "document generation date" and a storage period that depends on a document type is registered as the end of a document storage period. Each document whose document ID is registered in the document management table should be stored until the "document storage period" expires. If the "document storage period" registered is "unspecified," the document can be disposed of anytime. If the "document storage period" registered is "permanent," disposal of the document is always prohibited.

For example, if information for setting of a "document storage period" is contained, in addition to the document ID, in the QR code that is printed on the form of a payment application document, a "document storage period" can be set automatically on the basis of decoded information of the QR code. More specifically, if information to the effect that the document storage period of the payment application document should be set at 7 years is contained in the QR code, a date that is 7 years after the date of generation of the payment application document can be set automatically as a "document storage period. "

In general, as for receipts, the storage period is determined in accordance with the amount of money received. Therefore, if information indicating the amount of money received of a receipt to be stuck to the form of a payment application document is contained in the QR code, a storage period of the receipt can be determined automatically from that information and registered as a "document storage period" in the document management table. It is also possible to store the number of years as a document storage period in the document management table so as to be correlated with the document ID instead of incorporating it in the QR code. Furthermore, a user can manually change or set a "document storage period" registered or to be registered in the document management table using a user interface (operation panel) of the document management apparatus 2.

The "document disposal date" is a date when the document was disposed of actually. Documents are disposed of by the document disposal apparatus 3. Therefore, a date when a notice of completion of disposal of a document (hereinafter also referred to as "disposal completion notice") is sent from the document disposal apparatus 3 to the document management apparatus 2 with designation of a document ID of a document that has been disposed of is registered in the document management table as a "document disposal date."

Each of the "document generation date, " "document storage period," and "document disposal date" among the registration items of the document management table may be registered in the form of a date and time. It is preferable that a user ID of a user who has generated a document using the electronic document generation apparatus 1 be registered in the document management table as a "document generator" or that a user ID of a user who has disposed of a document using the document disposal apparatus 3 be registered in the document management table as a "document disposer." In such a case, ID information of the user who has generated or disposed of the document can be acquired by utilizing an existing user authentication technique (e.g., one using an IC card).

The management of electronic documents using the electronic document generation apparatus 1 and the document management apparatus 2 according to the embodiment makes it possible to manage various electronic document files and various printed documents that are printed on sheets in such a manner that they are correlated with each other, which in turn makes it possible to manage electronic data of a date of generation of an application document in such a manner that it is correlated with an application job.

The above-described electronic file generation processing according to the embodiment is the exemplary processing in which a voucher that requires attachment of a receipt is generated by using the voucher generation system. Now assume another case that attachment of a receipt or the like is not necessary, an application document is generated as an electronic file on the basis of necessary items that are input to the voucher generation system, and the generated application document (electronic file) is automatically sent to an application document management server or an application document manager. In this case, when an application document is generated as an electronic file after input of necessary items, a procedure may be followed that a time stamp is acquired at this time point from the time stamp station 6 and embedded in the electronic file and then a document ID, the electronic file generation date and time, a storage period, and information relating to management are sent to the document management apparatus 2 and registered therein as management information. This makes it possible to store an accurate document generation date and time even in a case that an application is made in the form of an electronic document by generating an electronic file without outputting a printed document. In addition, even if a printed document is output after a lapse of a certain number of days from an application date (i.e., a date of generation of an electronic document), since the date and time of generation of the document (electronic file) is recorded, the accurate date of processing for an application or the like can be registered and the electronic file generation date (document generation date) as the start of document management can be managed.

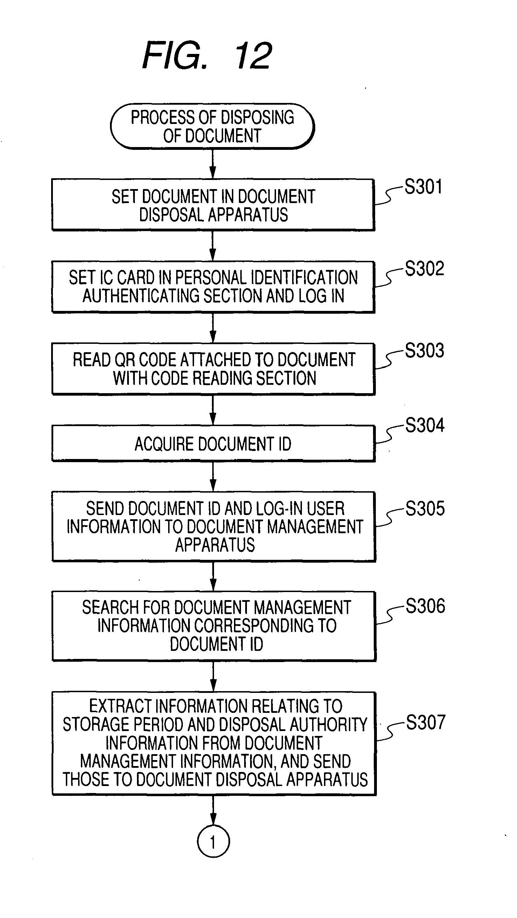

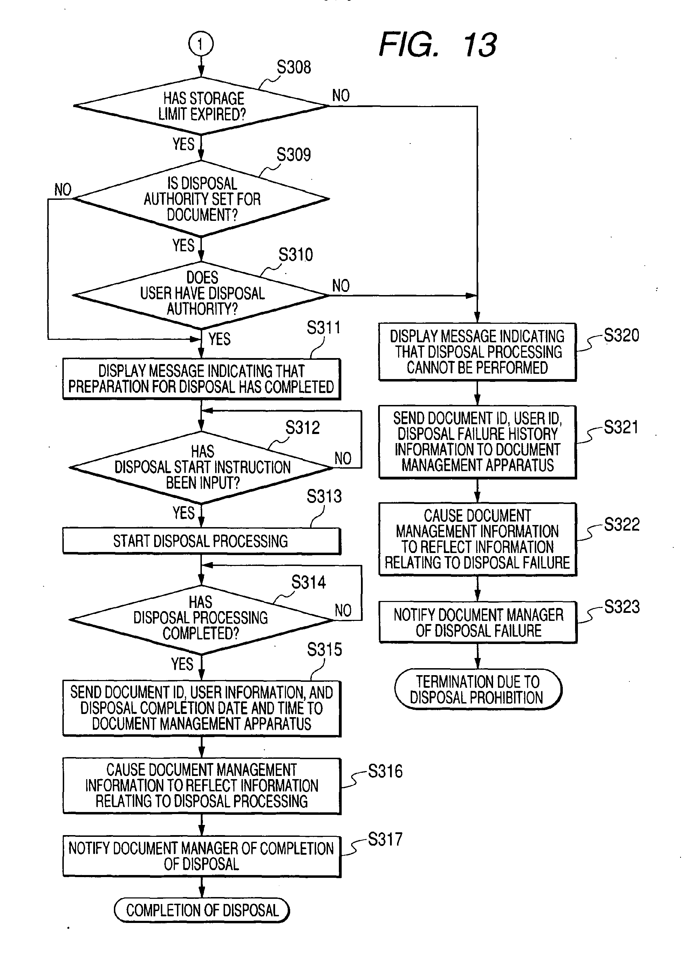

Next, a document disposal process that is executed in the system for managing documents starting from their generation using document management information will be described with reference to a flowchart of Figs. 12 and 13.

First, at step S301, a document disposer who is going to dispose of a document sets the document as a subject of disposal on the document tray unit 17 of the document disposal apparatus 3. In the document disposal apparatus 3 according to the embodiment, user authentication processing is performed to identify an operator who is going to dispose of the document to enable, by identifying the operator, disposal management that, for example, permits the operator to do disposal work only if he or she has disposal authority or stores a record of the operator if the document he or she is going to dispose of does not satisfy disposal conditions. To this end, at step S302, the person who is going to do disposal work sets, in the personal identification authenticating section 141 of the document disposal apparatus 3, an IC card in which his or her personal information is stored and logs in to the document disposal apparatus 3.

At step S303, the code reading section 142 reads a QR code that is printed on a head-side portion of the document to be disposed of which is placed on the document tray unit 17. At step S304, the code reading section 142 acquires a document ID by decoding the read-out QR code (coded information) . At step S305, the storage information acquiring section 143 sends the document ID acquired at step S304 to the document management apparatus 2 together with the information relating to the authenticated user who logged in.

In the document management apparatus 2, the management information sending/receiving section 121 receives the document ID and the log-in user information and, at step S306, the management information search section 123 conducts a search to determine whether management information corresponding to the document ID is stored in the management information storage section 122. The management information search section 123 extracts information relating to a storage period and disposal authority information from the retrieved management information corresponding to the document ID, and the management information sending/receiving section 121 sends those pieces of information to the document disposal apparatus 3 (step S307).

In the document disposal apparatus 3, at step S308 the disposal permission judging section 144 judges whether the end of the original storage period of the document corresponding to the document ID has already expired on the basis of the storage period information sent from the document management apparatus 2. If judging that the end of the original storage period has already expired (step S308: yes), at step S309 the disposal permission judging section 144 judges whether disposal authority is set for the document corresponding to the document ID (i.e., whether disposal permission or prohibition is given to an operator who disposes of the document) on the basis of the disposal authority information sent from the document management apparatus 2. If disposal authority is set (step S309: yes), at step S310 the disposal permission judging section 144 judges whether the disposal authority is given to the operator who logged in through the personal identification authenticating section 141 and is actually going to dispose of the document. If the disposal authority is given to the user who is doing the disposal work (step S310: yes), at step S311 the disposal control section 145 displays, on the display panel of the operation panel, a message to the effect that a preparation for disposal has completed and thereby prompts the disposal operator to input a disposal start instruction.

On the other hand, if no disposal authority is set for the document to be disposed of (step S309: no), since it means that disposal is permitted irrespective of the person who does disposal work on condition that the end of the storage period has expired, at step S311 the disposal control section 145 prompts the disposal operator to input a disposal start instruction.

If the disposal operator has not input a disposal start instruction (step S312: no), the disposal control section 145 waits for input of a disposal start instruction. If detecting a disposal start instruction (step S312: yes), at step S313 the disposal control section 145 starts disposal processing by controlling the stopper 20, the feed rolls 21 and 22, and the shredder driving section 146.

Informed of the start of disposal processing, at step S314 the disposal detecting section 147 detects whether the disposal processing has completed. If detecting that the disposal processing has completed, at step S315 the disposal detecting section 147 sends, to the document management apparatus 2, as information relating to the disposal processing, the document ID of the document that has been disposed of, the information relating to the operator who has done the disposal work, and a date and time of completion of the disposal processing.

In the document management apparatus 2, at step S316 the document management information of the management information storage section 122 is caused to reflect the information relating to the disposal processing received by the document information sending/receiving section 121 (i.e., the document management information is updated). At step S317, when the update of the document management information has completed, the document information sending/receiving section 121 notifies, by e-mail or a like means, a manager of the document concerned that the disposal of the document has completed.

On the other hand, if it is judged that the end of the storage period has not expired yet (step S308: no) or the disposal operator does not have authority to dispose of the document concerned (step S310: no), the process moves to step S320, where a message to the effect that disposal processing cannot be performed is displayed on the display panel. If a reason is displayed in addition to that message, the user who is doing the disposal work can be informed of why the disposal processing cannot be performed, that is, whether the disposal processing cannot be performed because the user does not have disposal authority or because the end of the storage period of the document has bet expired yet.

Since the operator not having disposal authority has attempted to dispose of the document, there is a probability that the operator has attempted to dispose of the document illegally. Therefore, at step S321, the document disposal apparatus 3 sends the document ID, the user ID of the disposal operator, and disposal failure time information to the document management apparatus 2. In the document management apparatus 2, at step S322, the document management information of the management information storage section 122 is caused to reflect the received information relating to the disposal failure (i.e., the document management information is updated).

In view of the fact that there is a probability that the disposal failure was caused by an illegal conduct, if a document manager is set for the document concerned, at step S323 information that the user not having disposal authority has attempted to dispose of the document or information that the user has attempted to dispose of the document before the end of the storage period is communicated to the document manager by e-mail or a like means.

In the above embodiment, one specific example was such that an application form file is generated and printed by using the voucher generation system and an electronic file is generated by reading a document produced by sticking a receipt to the application form. However, the electronic file generation processing of the invention is not limited to such a case. For example, in a case that unlike in the above embodiment an evidential material such as a receipt or a bill need not be stuck to an application form in using a processing system such as a voucher generation system, an application file is generated by the document generation processing system so as to reflect details of the processing.

In this case, it is possible to generate (issue) identification information unique to a job the processing system is going to carry out and to manage it in such a manner that it is correlated with identification information unique to a document or use it as identification information unique to a document. The document generation processing system may generate an electronic file in such a manner that identification information unique to a job or a document is coded, image data are generated by combining a QR code, bar code, or the like containing the coded identification information with image data reflecting details of processing, and an electronic file of the image data is generated. And correspondence between the electronic file and a document printed on the basis of it may be managed by using the QR code or bar code.

In this case, the following procedure can be followed. An electronic file generated by the processing system rather than an electronic file generated by reading a printed document optically is regarded as an electronic file of a document as a subject of management. A date and time when a job is registered by the processing system is acquired from the time stamp station 6 as a date and time of generation of an electronic document, and an end of a document storage period is set on the basis of storage period information provided in the processing system as corresponding to a document type. The document management apparatus 2 manages the corresponding relationship between the electronic file and a slip printed in the basis of the electronic file.

Likewise, consider an exemplary case that reports, meeting minutes, technical reports, patent application information for in-house management, etc. are generated by using general application software for document generation and generated documents are managed. In this case, for example, generation (completion) of a document means determination of electronic file submission and management forms and can be regarded as generation of a document to be managed. That is, acquiring a time stamp according to an instruction f rom a generator can at least verify that an electronic file of the completed document exists at that time point. In this case, it is possible to assign, as identification information unique to the document, one of numbers that are managed so as not to be duplicated for each document generator. Alternatively, document identification information may be acquired in such a manner that the document management apparatus 2 is instructed or requested to acquire an unused number as information unique to the document and, in response, the document management apparatus 2 returns, to the request source, a proper one of unused pieces of identification information that are not used for documents being managed by itself.

Identification information of a generated document can be coded and combined with image data of the document by an apparatus that has generated the document. Alternatively, identification information of a document may be combined with image data of the document and managed by the document management apparatus 2.

In the above example, a document generation date and time is acquired according to an instruction from a document generator. However, in a system in which an electronic file of a generated document is registered by uploading it to a particular server or the like, it is possible to cause the server to assign identification information unique to a document, combine a QR code produced by coding the identification information with data of the document, and manage a generation date and time (time stamp or the like). In this case, there may occur a case that it is preferable to consider that the uploading to the server has formally completed registration of the document and to manage the document using a document registration date and time of the uploading. In this case, an uploading time is acquired from the time stamp station 6 and managed as time information of generation of the electronic document. The server that has acquired the time stamp can calculate the last date of a document storage period and send that information to the document management apparatus 2 as management information.

In the above-described embodiments, the image reading section 101 of the electronic document generation apparatus 1 reads a document optically. Alternatively, for example, an electronic version of a document can be generated by reading the information contained in the document using a means attached to the document that enables information writing and reading by radio, such as an IC tag. In such a case, the invention can be implemented by constructing the image reading section 101 in the form of an information reading section capable of reading information not only optically but also by radio.

In the above-described embodiments, a document ID is embedded in a QR code which is a two-dimensional bar code. However, the invention is not limited to the case of using a bar code. For example, information including at least a document ID may be embedded in a chip that enables data writing and reading by radio, such as an IC tag. The invention can accommodate such a case, that is, the case of using a chip such as an IC tag that enables information writing and reading by radio by using an IC tag reading section and an IC tag information decoding section in place of the bar code extracting section 107 and the bar code decoding section 108, respectively.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A document management system for managing a printed document with document management information, the document management system comprising:
an electronic document generating unit that generates an electronic document;
a time-information acquiring unit that acquires information relating to time, which verifies that the electronic document generating unit generated the electronic document;
a storage-information acquiring unit that acquires information relating to a storage period of the printed document corresponding to the electronic document; and
a management-information storing unit that stores document management information in which identification information of the electronic document is associated with the information relating to the storage period of the printed document.

2. The system according to claim 1, wherein the information, which relates to the storage period of the printed document and is acquired by the storage-information acquiring unit, comprises:
the information, which relates to the time verifying that the electronic document generating unit generated the electronic document and is acquired by the time-information acquiring unit; and
the storage period of the printed document, which is determined in advance in accordance with information relating to a type of the electronic document.

3. The system according to claim 1, wherein the information, which relates to the storage period of the printed document and is acquired by the storage-information acquiring unit, comprises a storage limit of the printed document, which is determined from:
the information, which relates to the time verifying that the electronic document generating unit generated the electronic document and is acquired by the time-information acquiring unit; and
the storage period of the printed document, which is determined in advance in accordance with information relating to a type of the electronic document.

4. The system according to claim 1, wherein the information, which relates to the storage period of the printed document and is acquired by the storage-information acquiring unit, comprises:
the information, which relates to the time verifying that the electronic document generating unit generated the electronic document and is acquired by the time-information acquiring unit; and
information relating to a type of the electronic document.

5. The system according to any one of claims 1 to 4, wherein the electronic document generating unit reads the printed document to generate the electronic document.

6. The system according to any one of claims 1 to 4, wherein the electronic document generating unit reads the printed document optically to generate the electronic document.

7. The system according to any one of claims 1 to 4, wherein:
the electronic document generating unit comprises a computer terminal, and
a document creation program running on the computer terminal generates the electronic document.

8. The system according to any one of claims 1 to 7, wherein identification information of the electronic document is acquired in response to that the electronic document generating unit generates the electronic document.

9. The document management system according to any one of claims 5 and 6, further comprising:
an extracting unit that extracts identification code fromdata, which is read from the printed document by the electronic document generating unit; and
a decoding unit that decodes the identification code into identification information of the electronic document.

10. The system according to claim 6, further comprising:
an extracting unit that extracts identification code from data, which is optically read from the printed document by the electronic document generating unit; and
a decoding unit that decodes the identification code into identification information of the electronic document.

11. The system according to any one of claims 1 to 10, further comprising:
an image feature quantity calculating unit that calculates a digest value unique to the electronic document, wherein:
the time-information acquiring unit sends a time stamp request including the calculated digest value of the electronic document to a time stamp station to acquire a time stamp from the time stamp station as the information relating to the time verifying that the electronic document generating unit generated the electronic document time-related information.

12. A document disposal management system comprising:
a management-information storing unit that stores document management information in which pieces of identification information of electronic documents are associated with pieces of information, which relate to storage of printed documents corresponding to the electronic documents and have been set based on of time at which the electronic documents were generated;
a disposal-document identification-information reading unit that reads identification information of a disposal target document from the disposal target document;
a disposal-information extracting unit that extracts information, which relates to storage of the disposal target document and corresponds to the identification information of the disposal target document, from the pieces of document management information stored in the management-information storing unit;
a disposal permission judging unit that judges whether or not it is permitted to dispose of the disposal target document based on the information, which relates to the storage of the disposal target document and is extracted by the disposal-information extracting unit; and
a disposal unit that disposes of the disposal target document if the disposal permission judging unit judges that it is permitted to dispose of the disposal target document.

13. The system according to claim 12, wherein the information relating to the storage of the disposal target document comprises at least one of a storage period of the disposal target document, a storage limit of the disposal target document, and a disposal permission date of the disposal target document.

14. A document management method, comprising:
generating an electronic document;
acquiring information relating to time, which verifies that the electronic document was generated;
acquiring information relating to a storage period of a printed document corresponding to the electronic document;
storing document management information in which identification information of the electronic document is associated with the information relating to the storage period of the printed document; and
managing the electronic document or the printed document, which is a printed electronic document, using the document management information.

15. A document disposal management method comprising:
storing document management information in which pieces of identification information of electronic documents are associated with pieces of information, which relate to storage of printed documents corresponding to the electronic documents and have been set based on of time at which the electronic documents were generated;
reading identification information of a disposal target document from the disposal target document;
extracting information, which relates to storage of the disposal target document and corresponds to the identification information of the disposal target document, from the pieces of stored document management information;
judging whether or not it is permitted to dispose of the disposal target document based on the extracted information, which relates to the storage of the disposal target document; and
disposing of the disposal target document if it is judged that it is permitted to dispose of the disposal target document.
